# EUROPEAN PATENT APPLICATION

(11) **EP 2 495 928 A1**
(43) Date of publication of application: **05.09.2012**
(21) Application number: 11305229.4
(22) Date of filing: 03.03.2011
(51) Int. Cl.: H04L 29/06, H04L 29/08, G06F 17/30, H04W 88/02

(54) **Method of managing the communication between a host device and an embedded web server**

(71) Applicant: Gemalto SA, 92190 Meudon (FR)
(72) Inventor: Foesser, Christophe, LA CIOTAT, 13600 (FR)

(57) **Abstract**

The invention is a method for managing the communication between a host device and a web server embedded in a secure element connected to the host device. The device comprises a client application. The server comprises a server application. The method comprises the steps of:
- sending a command containing a first secret data from the server to the client application,
- generating a request by means of the client application and sending this request to the server, the request containing a second secret data computed from the first secret data and said request targeting the server application,
- checking the second secret data into the server and treating the request as a hostile request in case of unsuccessful checking.

## Description

### (Field of the invention)

The present invention relates to methods of managing communications between a host device and an embedded web server. It relates particularly to methods for managing the communication between a host device and a web server which is embedded in a secure element.

### (Background of the invention)

Secure elements may provide several services like crypto services, SIM features, or any applications which may be embedded in a smart card for example.

Secure elements (also named secure tokens) are small machines comprising a memory, a microprocessor and an operating system for computing treatments. Secure elements are intended to connect - either in contact or contactless mode - a host device which may provide power and a user interface. In general, secure elements comprise a plurality of memories of different types. For example, they may comprise memory of RAM, ROM, EEPROM or Flash type. Secure elements have limited computing resources. For example, smart cards are secure elements. A secure element may comprise a web server. A web server may rely on dedicated applications which provide services and are capable of performing dynamic treatments for the web server. For instance, a web server embedded in a smartcard may comprise an application called servlet which is able to compute data according to preset rules or algorithms.

An embedded web server may receive Hypertext Transfer Protocol (HTTP) request that targets an application belonging to the web server. Such HTTP request may be easily sent by any entity installed in the connected host device.

In the Internet domain it is known to establish a secure channel after the client has been authenticated. Unfortunately, such mechanisms require an action of the final user. It is desirable to have automatic mechanism for setting a secure communication in a hidden manner.

If a malicious entity has been installed in the host device, the targeted application may be accessed by such malicious entity. Consequently, an attack may be performed against the embedded web server.

There is a need for managing in a secure manner the communication between a host device and a web server embedded in a secure element.

### (Summary of the Invention)

An object of the invention is to solve the above mentioned technical problem.

The object of the present invention is a method for managing the communication between a host device and a web server which is embedded in a secure element. The secure element is connected to the host device. The host device comprises a first application. The web server comprises a second application. The method comprises the steps of:
- sending a command from the web server to the first application, the command containing a first secret data,
- generating a request by means of the first application and sending said request to the web server, said request containing a second secret data computed from the first secret data, said request targeting the second application,
- checking the second secret data into the web server and treating the request as a hostile request in case of unsuccessful checking.

Advantageously, the web server may comprise a web page reachable through an URI and the command may comprise said URI.

Said first and second secret data may be equal.

Optionally, the method may comprise the further steps of:
- sending a second message from the web server to the first application, said second message containing a third secret data, said third secret data being computed from the second secret data or being randomly generated,
- generating a second request by means of the first application and sending the second request to the web server, said second request containing a fourth secret data computed from the third secret data, said second request targeting the second application,
- checking the fourth secret data into the web server and treating the second request as a hostile request in case of unsuccessful checking.

Advantageously, the first application may be a web browser comprising a script engine, the web page may reference or contain an active agent, the command may aim at launching the web browser on the web page, the first application may retrieve the active agent and the request may be generated by means of the active agent.

Advantageously, the host device may be a telecom equipment, the first application may be a midlet which comprises an active agent and the request may be generated by means of the active agent comprised in the midlet.

A secure session may be established between the first application and the web server with the first secret data used as seed.

Another object of the invention is a secure element intended to be connected to a host device comprising a first application. The secure element comprises a web server. The web server comprises a second application and a first means adapted to send a command to the first application Said command contains a first secret data. The second application comprises:
- a second means adapted to generate the first secret data,
- a third means adapted to retrieve a second secret data from a request sent by the host device and targeting the second application,
- a fourth means adapted to check the second secret data,
- a fifth means adapted to treat the request as a hostile request in case of unsuccessful checking.

Advantageously, the secure element may comprise a sixth means adapted to trigger the sending of the command from the web server to the first application.

Optionally, the web server may comprise a web page reachable through an URI and the firstmeans may be able to add the URI in the command. The first application may be a web browser comprising a script engine. The web page may reference or contain an active agent. The command may aim at launching the web browser on the web page. The web browser may retrieve the active agent and the request may be generated by means of the active agent.

Advantageously, the second application may be adapted to establish a secure session between the first application and the web server and the secure session may be established by using the first secret data used as seed.

Another object of the invention is a host device comprising a midlet. The host device is a telecom equipment able to connect a secure element as described above. The midlet comprises an active agent which is adapted to retrieve a first secret data from a command sent by the secure element. This active agent is able to generate a second secret data computed from the first secret data. This active agent is able to generate a request targeting the second application of the web server embedded in the secure element, said request containing the second secret data.

Another object of the invention is a system which comprises a host device and a secure element as described above.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically a first example of a secure element according to the invention;
- Figure 2 is a first example of a system comprising a host device and a secure element according to the invention;
- Figure 3 is a first flowchart showing a data exchange between a host device and a secure element according to the invention;
- Figure 4 is a second example of a system comprising a host device and a secure element according to the invention;
- Figure 5 is a second flowchart showing a data exchange between a host device and a secure element according to the invention; and
- Figure 6 is a third flowchart showing a data exchange between a host device and a secure element according to the invention.

### (Detailed description of the preferred embodiments)

The invention applies to any kinds of secure element comprising a web server. These secure elements may be intended to connect a large number of host device types like mobile phones, Electronic Funds Transfer Terminals for payment, Personal Digital Assistants (PDA), Tablets, Personal Computers, or Machine-To-Machine (M2M) modules.

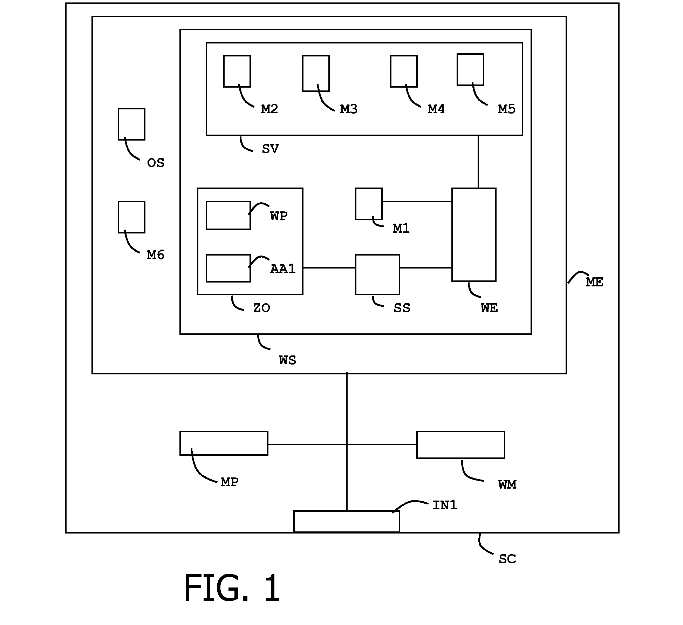

**Figure 1** shows an example of architecture of a secure element SC according to a first embodiment of the invention.

In the present example, the secure element is a Universal Integrated Circuit Card (UICC). The secure element may be a SIM card, a USIM card or any personal security token.

Alternatively, the secure element SC may be a Secure Digital (SD) card, a miniSD card, a microSD card or a smart card.

The secure element SC contains a microprocessor MP, a communication interface IN1, a non volatile memory ME, and a working memory WM like a RAM. The communication interface IN1 is intended to be connected to a host device and allows exchanging data with the connected host device. The interface IN1 may be either a contact or contactless interface. The memory ME may be an EEPROM or Flash memory. The memory ME contains an operating system OS, a means M6 and a web server WS. The web server WS comprises a secured servlet SV, a system servlet SS, a storage area ZO, a server engine WE and a means M1. The servlet SV comprises the four means M2 to M5. The storage area comprises an active agent AA1 and a web page WP which may be accessed through a dedicated Uniform Resource Identifier (URI) U1. The web page WP comprises a reference to the active agent AA1.

Optionally, the web page WP may comprise the active agent AA1.

Advantageously, the servlet SV may be implemented in Java ® or Java ME ® or JavaCard ® language and the active agent AA1 may be a script. For instance, the active agent AA1 may be implemented in Javascript ®. In this case the script AA1 may be executed by a usual script engine associated to a web browser.

The server engine WE is the access point of the web server WS. The engine WE is capable of handling communication with a client according to preset protocol (e.g. HTTP). The engine WE is capable of dispatching the requests received from client to the relevant servlet.

The storage area ZO is adapted to store static data. The storage area ZO may be a database, a file system or any container.

The system servlet SS is able to manage basic services for the web server WS. The system servlet SS is able to manage services which are not dedicated to a unique application type. For instance, the system servlet SS is capable of accessing data stored in the storage area ZO.

Optionally, the storage area ZO may be located outside the web server and the system servlet SS is still capable of accessing the storage area ZO.

The means M2 is capable of generating a secret data SD1. For instance, the means M2 may be a software element which implements a random generator. Alternatively, the means M2 may access a hardware generator. The means M2 may also generate a secret data SD1 on the basis of a previously stored input data and by running a predefined algorithm.

The means M1 is capable of generating a command which comprises a secret data SD1 provided by the means M2. The means M1 is capable of sending the command to an application embedded into a host device intended to be connected to the secure element SC. The means M1 is assumed to known what application is to be targeted and how to send the command.

For instance, the means M1 may known (either through a preset reference or by asking an active element) the port on which the targeted midlet has previously registered. Alternatively, the means M1 may be able to send a LaunchBrowser Toolkit command for opening a web page in the browser of the connected host device.

The means M3 is capable of retrieving a secret data SD2 from a request coming from the host device and targeting the servlet SV.

The means M4 is capable of checking the secret data SD2. For example, the means M4 is able to compute an expected secret data EXS from the secret data SD1 and to compare the received secret data SD2 with the secret data EXS. For instance, the expected secret data EXS may be computed by adding one to the initial secret data SD1. (e.g. EXS = SD1 + 1)

The means M5 is capable of treating the received request as a hostile request in case of unsuccessful checking.

For example, if the checking is successful, the request is processed by the servlet SV and a response is sent to the relevant application in the host device.

If the checking is unsuccessful, the request is not processed and an error code is sent to the relevant application in the host device. Alternatively, the secure element may remain mute in case of unsuccessful checking. Advantageously, the means M5 may update an error counter stored into the non volatile memory ME. The means M5 may also send a warning message to a distant machine in order to give the alarm to an administrator. Such a warning message may be sent through the Over-The-Air (OTA) mechanism when the secure element is a SIM and the host device is a mobile phone. Alternatively, the means M5 may ask for a display of a warning message on the display screen of the connected host device.

The means M6 is capable of triggering the sending of a command CD1 from the web server WS to an application embedded in a host device connected to the secure element SC.

The four means M2 to M5 may be designed as four distinct software components or merged in any number of software components.

Alternatively, the servlet SV may be merged with the server engine WE or any components belonging to the web server WS.

Alternatively, the functions of the servlet SV may carry out by a software component developed in any language compliant with the web server. For instance, such a software component may be developed in native language or C language. In other words, this software component can be different from a servlet and able to perform treatments for the web server.

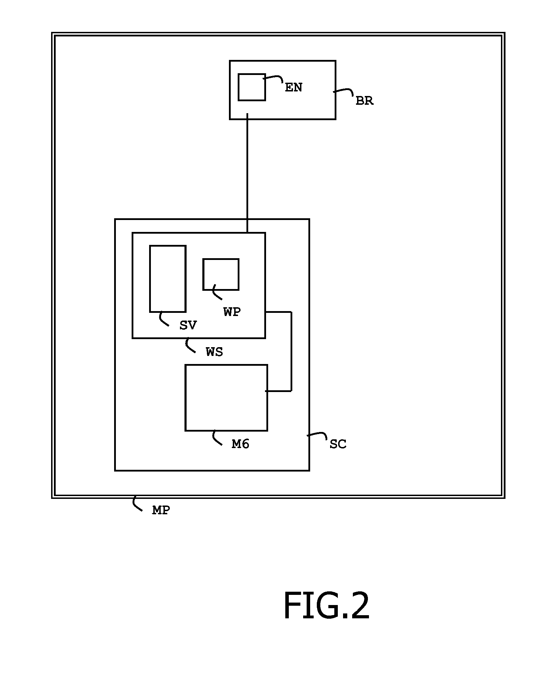

**Figure 2** shows an example of a system comprising a host device MP and a secure element SC according to a first embodiment the invention.

In the present example, the host device MP is a mobile phone. Alternatively, the host device may be a PDA, a computer machine comprising an interface able to communicate with a secure element or any device comprising a web browser.

The host device MP comprises a web browser BR which has a script engine EN. The script engine EN is capable of running a script like the active agent AA1.

A secure element SC is connected to the mobile phone MP. In a preferred embodiment, the secure element SC is a SIM card.

The secure element SC may have architecture similar to the architecture of the secure element as described at Figure 1. In addition, the secure element SC comprises a means M6 which is capable of triggering the sending of a command CD1 from the web server WS to the browser BR. For instance, the means M6 may be a software application able to communicate with a distant machine through the OTA mechanism. The means M6 may be able to ask the web server WS to send a command CD1 to the browser BR based on information received from the distant machine. Alternatively, the means M6 may ask the web server WS to send a command CD1 to the browser BR according to a timer signal or according to the value of a dedicated field stored into the secure element SC. In other words, the means M6 is able to receive or to detect a preset event and to trigger the web server accordingly.

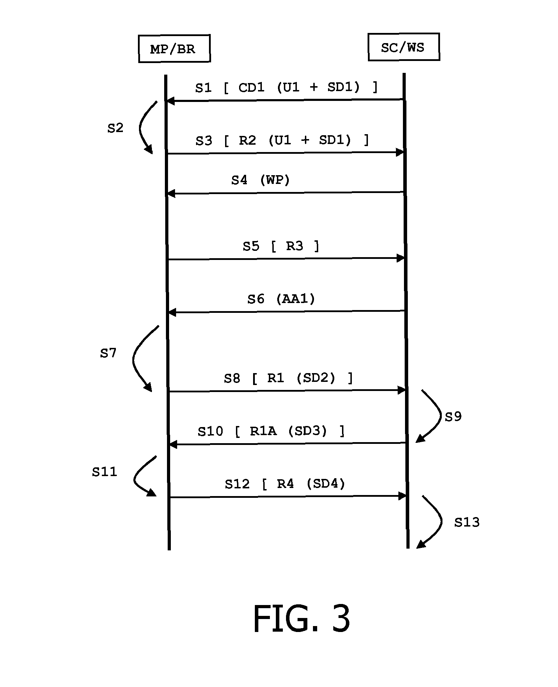

**Figure 3** depicts a flowchart showing a sequence of data exchange between a host device MP and a secure element SC according to a first embodiment of the invention.

The host device MP is the device described at Figure 2 and the secure element SC is the secure element described at Figure 2.

The web server WS is assumed to have been triggered by the means M6. At step S1, the web server WS generates a secret data SD1, then build and send a command CD1 containing the secret data SD1. For instance, the command CD1 may be the SIM Toolkit Command "Launch Browser" requesting the browser to open the web page WP. The command CD1 comprises the URI U1 of the page WP and the secret data SD1.

For instance, the URI U1 may be "127.0.0.1:3516/index.html?secret=<value>", where <value> stands for the secret data value.

Thus the web browser BR creates a document from the web page WP.

At step S2, the browser BR analyzes the received command CD1 and generates a request R2 for retrieving the main document (i.e. index.html in the present example) of the web page WP. The request R2 contains the URI U1 of the web page WP and the secret data SD1. The request R2 is sent to the web server WS at step S3. Although the secret data SD1 included in the request R2 is not used by the web servers WS, the generation of the request R2 allows the browser BR to store the secret data SD1 in the document associated to the instance of the page WP opened in host device side.

Then at step S4, the web server sends the content of the page WP to the browser BR in response to the request R2.

At step S5, the browser BR sends a request R3 to the web server WS for requesting the optional dependencies of the page WP. The dependencies may be a script, a cascading style sheet (CSS) or a picture for example. In response the server WS sends the active agent AA1 at step S6. For instance, the active agent AA1 may be a script written in Javascript ®. At this point, the document of the web page WP is completed and ready to use into the host device MP.

Alternatively, the web page WP may contain the active agent AA1 and the steps S5 and S6 are not required.

At step S7, the active agent AA1 computes a secret data SD2 from the secret data SD1 which is retrieved from the document. For instance, a cryptographic function may be used for computing SD1 or SD1 may be incremented by a preset value like 3 (e.g. SD2 = SD1 + 3) .

At step S8, the active agent AA1 generates a request R1 which targets the servlet SV of the web server WS. For instance, the request R1 may aim at verifying a PIN code. The request R1 contains the computed secret data SD2. The active agent AA1 comprises the relevant path corresponding to the targeted servlet SV. For example the path may be "/MyServlet/VerifyPin."

At step S9, the servlet SV (via the means M4) checks if the received secret data SD2 is correct. To do this, the servlet SV performs the same computation to know the expected value EXS. Then the servlet SV compares the received secret data SD2 with the computed expected value EXS.

In case of wrong checking, the servlet SV (via the means M5) concludes that the received request R1 is a hostile request and initiates the appropriate action.

In case of right checking, the servlet SV concludes that the received request R1 is a reliable request. The servlet SV may perform the service associated to the request R1 and send a corresponding response R1A at step S10.

It should be noted that the instance of web page WP can be considered secure because all components of the web page WP are provided by the web server WS itself.

Advantageously, the servlet may generate a new secret data SD3 and include SD3 in the response R1A. In this case, the new secret data SD3 received by the instance of the web page WP (in host device) becomes the new basis to be used for a further request sent by the instance of web page WP. In this case, the secret data used by the instance of the web page WP may be equal to the secret data received from the servlet SV and the servlet may update the secret data after receipt of every requests. (i.e. SD2 = SD1 and SD1 ≠ SD3).

Alternatively, the response R1A may contain no secret data. In this case, the previous secret data SD2 remains the basis to be used for a further request sent by the instance of the web page WP.

At step S11, the active agent AA1 may generate a request R4 which targets the servlet SV. A new secret data SD4 is generated by the agent AA1 and included into the request R4. The secret data SD4 is computed from either the secret data SD2 or SD3 depending on the selected implementation described above.

At step S12, the request R4 is sent to the servlet SV via the web server WS.

At step S13, the servlet SV checks if the received secret data SD4 is correct and makes the relevant decision.

In the present example, the requests R1, R2, R3 and R4 are HTTP requests.

An advantage of the invention is to allow a secured servlet to check the origin of a received request and thus to be able to make the decision to treat the request as either a reliable request or a dangerous request.

Another advantage of the invention is to allow an application embedded in the host device to use the services provided by a usual (i.e. non-secured) servlet. In other words, the invention is compatible with the already deployed applications and web server.

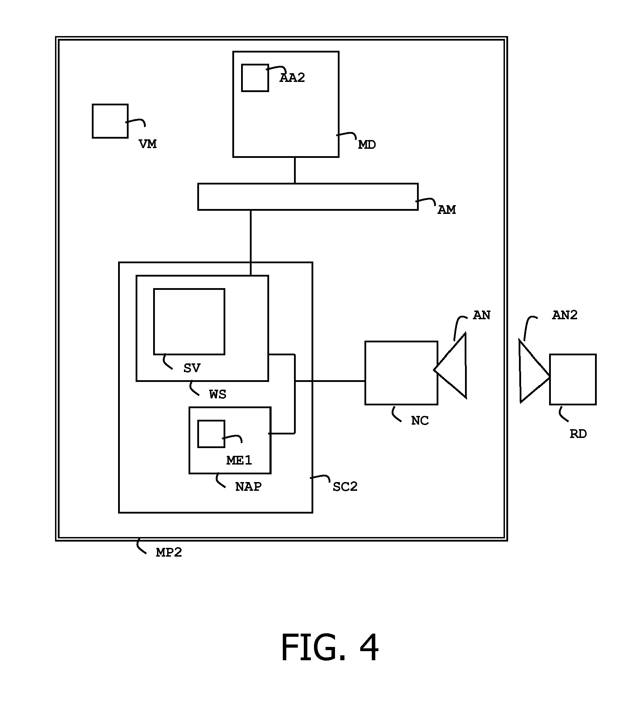

**Figure 4** shows an example of a system comprising a host device MP2 and a secure element SC2 according to a second embodiment the invention.

In the present example, the host device MP2 is a mobile phone.

The host device MP2 comprises a Java ® virtual machine VM, an application Manager AM and a midlet MD. The midlet MD relies on the virtual machine VM. The Midlet is a J2ME (Java 2 Micro Edition also called Java ME) application which uses the MIDP 2.x as defined in SUN Mobile Information Device Profile for Java™ 2 Micro Edition Version 2.1 for example.

The application manager AM controls the activities of the Midlets within the Java ME environment on the mobile phone MP2. The application manager AM can select which Midlet is active at a given time by starting and by pausing it individually.

The midlet MD comprises an active agent AA2 able to compute a secret data according to rules compliant with the behavior of the web server WS.

The host device MP2 comprises an antenna AN, a NFC controller NC and a secure element SC2. The secure element SC2 is connected to the mobile phone MP2 either in contact or contactless mode. The sub-system AN+NC is intended to communicate with a NFC reader RD which has its own antenna AN2. For example, the NFC reader RD may be included in a payment machine or an access control machine dedicated to transport.

The NFC controller NC and the secure element SC2 are linked by a single wire link. This single wire link allows a communication in contact mode between the NFC controller NC and the secure element SC2. In a preferred embodiment, both the NFC controller NC and the secure element SC2 use the Single Wire Protocol (SWP) as defined by the TS 102.613.

In a one embodiment, the secure element SC2 is a Universal Integrated Circuit Card (UICC) which has a structure similar to the secure element SC of Figure 1.

Compared to the secure element of Figure 1, the secure element SC2 comprises a NFC application NAP in addition. The NFC application NAP is intended to communicate with the NFC reader RD through a contactless protocol. The used contactless protocol may be compliant with ISO14443, ISO18092 or ISO15693 standards. The used contactless protocol may also comply with proprietary specifications. The NFC application NAP may be dedicated to various domains like electronic ticketing, gaming, e-wallet, debit/credit payment card, electronic keys for accessing a car/a house / a room for example.

In one embodiment, the web server WS may be a Smart Card Web Server (SCWS) as defined by OMA-TS Smartcard Web Server V1.0 standard.

The application NAP comprises a means ME1 able to send a message to the web server WS in order to trigger the web server WS. In particular, the means ME1 is capable of asking the server WS to send a command CD1 targeting the midlet MD.

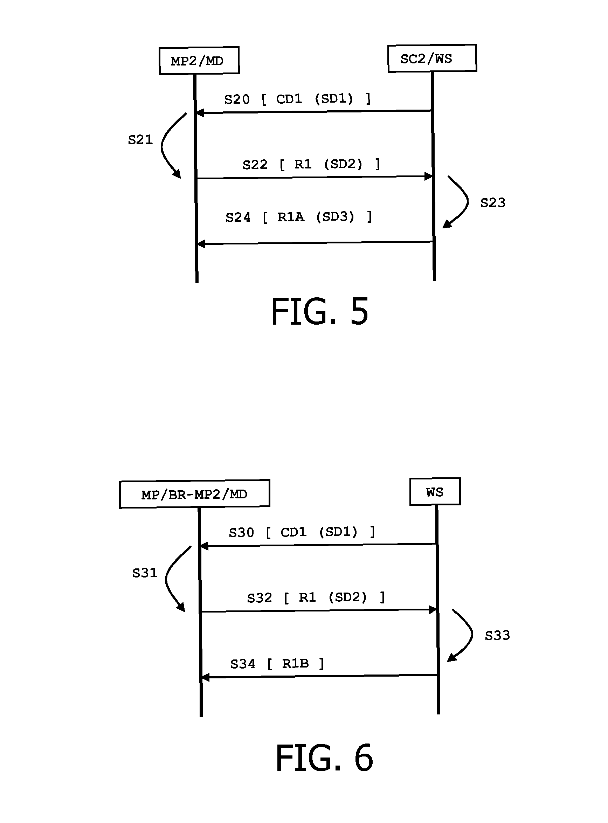

**Figure 5** depicts a flowchart showing a sequence of data exchanges between the host device MP2 and a secure element SC2 according to a second embodiment of the invention.

The host device MP2 is the device described at Figure 4 and the secure element SC2 is the secure element described at Figure 4.

Alternatively, the secure element SC2 may comprise no web page. (and no active agent AA1).

The application NAP is assumed to have received an applicative message from the NFC reader RD and to have triggered the web server WS according to received applicative message.

At step S20, the web server WS generates a first secret data SD1 and builds a command CD1 containing the secret data SD1. For example, the command CD1 may be a connection on the port wherein the midlet MD has registered. For instance the command CD1 may be a SIM Toolkit Openchannel command targeting the IP address 127.00.1 and the specific port 5000. In other words, the command targets the midlet MD. The command CD1 is sent to the application manager AM that manages the port for the midlet MD. Then the application manager AM starts the midlet MD and forwards the command CD1 to the midlet MD.

At step S21, the midlet MD analyzes the received command CD1 and the active agent AA2 computes a secret data SD2 from the secret data SD1. For instance, a XOR function may be used for computing SD2. Advantageously, any algorithms using the basic mathematical operations (e.g. addition, subtraction or multiplication) may be used.

At step S22, the active agent AA2 generates a request R1 which targets the servlet SV of the web server WS. For instance, the request R1 may aim at updating a counter. The request R1 contains the computed secret data SD2.

At step S23, the servlet SV checks if the received secret data SD2 is correct. The servlet SV may perform the same computation to know the expected value. Then the servlet SV compares the received secret data SD2 with the computed expected value.

In case of wrong checking, the servlet SV concludes that the received request R1 is a hostile request and makes the appropriate decision.

In case of right checking, the servlet SV concludes that the received request R1 is a reliable request since the request R1 has been sent by a reliable entity. The servlet SV may perform the service associated to the request R1 and send a corresponding response R1A at step S24. It should be noted that the midlet MD can be considered secure because its authenticity can be controlled via a signature as defined by MIDP 2.0 standard and because only one midlet may be registered on a given port at a given time.

Advantageously, the servlet may generate a new secret data SD3 which is included into the response R1A. In this case, the new secret data SD3 received by the midlet MP becomes the new basis to be used for a further request sent by the midlet MP.

Alternatively, the response R1A may contain no secret data. In this case, the previous secret data SD2 remains the basis to be used for a further request sent by the midlet MP.

In the above-described example, the application NAP is triggered by the receipt of an applicative data emitted by the NFC reader RD before step S20. Alternatively, the application NAP may be triggered by any kind of event. For example, the application NAP may be triggered by the receipt of a message coming from a component embedded in the secure element SC2 itself. For instance, the secure element SC2 may comprises a sensor able to send a message to the application NAP. The embedded component may be a sensor able to measure the light, a motion, a temperature, a magnetic field, the gravity, the humidity, a vibration, the pressure, an electrical field, a sound, and any other physical aspects of the external environment.

Alternatively, the application NAP may be triggered by the receipt of a message coming from a component embedded in the connected host device MP2. The embedded component may be a sensor as described above.

The present example has been described for a host device comprising NFC features. The invention also applies to host devices which do not have any NFC features and the application NAP may be devoid of NFC features. The host device MP2 may comprise any kind of controller able to communicate with the secure element SC2 and the secure element SC2 may comprise a compliant application. For instance, the controller may be a USB or Wi-Fi controller and may be able to communicate with the secure element SC2 through IS07816, Single Wire Protocol (SWP) or USB protocol.

**Figure 6** depicts a flowchart showing a sequence of data exchanges between a host device and a secure element according to a third embodiment of the invention.

The host device may be the device MP2 described at Figure 4 and the secure element may be the secure element SC2 described at Figure 4. The secure element comprises a web server WS which contains a system servlet SS. The system servlet SS is attached to the basic functions of the web server WS. The system is able to establish a secure session between the web server and an application embedded in the host device.

Alternatively, the host device may be any kind of device adapted to communicate with a secure element. For example, the host device may be a payment machine, a personal computer or a M2M wireless module.

The web server WS is assumed to have been triggered by an internal event or an external event.

At step S30, the web server WS generates a first secret data SD1, builds a command CD1 containing the secret data SD1 and sends the command CD1 to the host device. For instance, the command CD1 may target the midlet MD.

At step S31, the midlet MD analyzes the received command CD1 and its active agent AA2 computes a secret data SD2 from the secret data SD1. The computation of SD2 may rely on a preset algorithm. Alternatively, SD2 may be set with the value of SD1.

At step S32, the active agent AA2 generates a request R1 which targets the system servlet of the web server WS. The request R1 contains the computed secret data SD2.

At step S33, the system servlet checks if the received secret data SD2 is correct.

In case of wrong checking, the servlet SV concludes that the received request R1 is a malevolent request and makes the appropriate decisions.

In case of right checking, the servlet SV concludes that the received request R1 is correct and a response R1B may be sent to the midlet MD at step S34. Thus a secure session may be established between the midlet and the web server WS. Advantageously, the secure session is based on a value derived from the secret data SD1. Thus the secret data SD1 may be considered as a seed which allows computing related secret values. Such secure session may be similar to the Transport Layer Security (TLS) wherein the initial secret seed is provided by web server WS. It is to be noted that in existing web server systems, the initial security data is never given by a web server before security establishing.

It should be noted that the application MD is not necessarily a midlet. The application MD may be any type of application capable of sending a message to the web server WS. The application manager AM has been described for the example of midlets. Depending on the operating system framework, the application manager may be optional. The invention applies whatever the type of operating system of the host device connected to the secure element is. For example, the invention is well-suited for cell phones using iOS ® for Iphone ®, Android OS ®, Symbian OS ®, Bada Mobile OS ®, Blackberry OS ® and Windows phone ®.

The invention also applies to secure elements comprising a plurality of servlets managed according to the invention.

The invention also applies to mobile phone comprising both a web browser and one or several midlets. The invention allows managing several communications in parallel in a secure manner.

## Claims

1. A method for managing the communication between a host device (MP) and a web server (WS) embedded in a secure element (SC), the secure element (SC) being connected to the host device (MP) which comprises a first application (BR, MD), said web server (WS) comprising a second application (SV), **characterized in that** the method comprises the steps of:
- sending a command (CD1) from the web server (WS) to the first application (BR, MD), said command (CD1) containing a first secret data (SD1),
- generating a request (R1) by means of the first application (BR, MD) and sending said request (R1) to the web server (WS), said request (R1) containing a second secret data (SD2) computed from the first secret data (SD1), said request (R1) targeting the second application (SV),
- checking the second secret data (SD2) into the web server (WS) and treating the request (R1) as a hostile request in case of unsuccessful checking.

2. A method according to claim 1, wherein said web server (WS) comprises a web page (WP) reachable through an URI (U1) and wherein the command (CD1) comprises said URI (U1).

3. A method according to any one of claims 1 to 2, wherein said first and second secret data (SD1, SD2) are equal.

4. A method according to any one of claims 1 to 3, wherein the method comprises the further steps of:
- sending a second message (R1A) from the web server (WS) to the first application (BR, MD), said second message (R1A) containing a third secret data (SD3), and wherein third secret data (SD3) is computed from the second secret data (SD2) or randomly generated,
- generating a second request (R4) by means of the first application (BR, MD) and sending said second request (R4) to the web server (WS), said second request (R4) containing a fourth secret data (SD4) computed from the third secret data (SD3), said second request (R4) targeting the second application (SV),
- checking the fourth secret data (SD4) into the web server (WS) and treating the second request (R4) as a hostile request in case of unsuccessful checking.

5. A method according to any one of claims 1 to 4, wherein the first application is a web browser (BR) comprising a script engine (EN), wherein said web page (WP) references or contains an active agent (AA1), wherein the command (CD1) aims at launching the browser (BR) on the web page (WP), wherein the first application (BR) retrieves the active agent (AA1) and wherein the request (R1) is generated by means of the active agent (AA1).

6. A method according to any one of claims 1 to 4, wherein the host device (MP) is telecom equipment, wherein the first application is a midlet (MD) which comprises an active agent (AA2) and wherein the request (R1) is generated by means of the active agent (AA2).

7. A method according to claim 1, wherein a secure session is established between the first application (BR, MD) and the web server (WS) with the first secret data (SD1) used as seed.

8. A **secure element** (SC) intended to be connected to a host device (MP) comprising a first application (MD, BR), said secure element (SC) comprising a web server (WS), said web server (WS) comprising a second application (SV),
**characterized in that** said web server (WS) comprises a first means (M1) adapted to send a command (CD1) to the first application (MD, BR), said command (CD1) containing a first secret data (SD1) and **in that** said second application (SV) comprises:
- a second means (M2) adapted to generate the first secret data (SD1),
- a third means (M3) adapted to retrieve a second secret data (SD2) from a request (R1) sent by the host device (MP) and targeting the second application (SV),
- a fourth means (M4) adapted to check the second secret data (SD2),
- a fifth means (M5) adapted to treat the request (R1) as a hostile request in case of unsuccessful checking.

9. A secure element (SC) according to claim 8, wherein the secure element (SC) comprises a sixth means (M6) adapted to trigger the sending of the command (CD1) from the web server (WS) to the first application (MD, BR).

10. A secure element (SC) according to claim 8 or 9, wherein the web server (WS) comprises a web page (WP) reachable through an URI (U1) and wherein said first means (M1) is able to add the URI (U1) in the command (CD1), wherein the first application is a web browser (BR) comprising a script engine (EN), wherein said web page (WP) references or contains an active agent (AA1), wherein the command (CD1) aims at launching the browser (BR) on the web page (WP), wherein the browser (BR) retrieves the active agent (AA1) and wherein the request (R1) is generated by means of the active agent (AA1).

11. A secure element (SC) according to claim 8, wherein the second application (SV) is adapted to establish a secure session between the first application (BR, MD) and the web server (WS) and wherein the secure session is established by using the first secret data (SD1) used as seed.

12. A host device (MP) comprising a midlet (MD) said host device (MP) being a telecom equipment able to connect a secure element according to claim 8,
**characterized in that** said midlet (MD) comprises an active agent (AA2) adapted to retrieve a first secret data (SD1) from a command (CD1) sent by the secure element, to generate a second secret data (SD2) computed from the first secret data (SD1) and to generate a request (R1) targeting the second application (SV) of the web server embedded in the secure element, said request (R1) containing the second secret data (SD2).

13. A **system** comprising a host device (MP) and a secure element (SC),
**characterized in that** said secure element (SC) is according to claim 8.
